# FASCICULE DE BREVET EUROPEEN

(11) **EP 3 833 210 B1**
(45) Date de publication et mention de la délivrance du brevet: **23.09.2026**
(21) Numéro de dépôt: 19753034.8
(22) Date de dépôt: 08.08.2019
(51) Int. Cl.: A45C 5/02, B29C 51/00, B29C 70/00

(54) **PROCÉDÉ POUR RÉALISER UNE COQUE DE BAGAGE RIGIDE, COQUE DE BAGAGE ET BAGAGE**
VERFAHREN ZUR HERSTELLUNG EINER STARREN GEPÄCKSCHALE, GEPÄCKSCHALE UND GEPÄCK
METHOD FOR PRODUCING A RIGID LUGGAGE SHELL, LUGGAGE SHELL AND LUGGAGE

(30) Priorité: 10.08.2018 FR 1857463
(43) Date de publication de la demande: 16.06.2021
(73) Titulaire: Louis Vuitton Malletier, 75001 Paris (FR)
(72) Inventeur: LEGUILLOU, Olivier, 38370 Saint Clair du Rhône (FR); SCULLY, Kathleen, 75001 Paris (FR)
(74) Mandataire: Plasseraud IP
(86) Numéro de dépôt international: PCT/EP2019/071377
(87) Numéro de publication internationale: WO 2020/030766

(56) Documents cités:
- WO-A1-2017/153965
- WO-A1-2017/217783
- GB-A- 1 376 198
- US-A- 3 544 418

## Description

### Domaine de l'invention

La présente invention concerne une coque de bagage rigide, le bagage comprenant la coque et un procédé pour réaliser la coque.

### Contexte de l'invention

Il existe différents bagages comprenant deux coques reliées par une charnière, chaque coque présentant une paroi principale, deux parois longitudinales et deux parois transversales. L'invention concerne plus particulièrement la réalisation d'une coque comprenant un corps rigide (et de préférence étanche) en composite comportant une matrice et un renfort.

On connait notamment du document WO2017/140982A1 un tel bagage. Toutefois, bien qu'un tel bagage apporte satisfaction, la présente invention vise à en simplifier la réalisation, en réduire le coût de fabrication et en augmenter la robustesse et/ou en réduire le poids.

Le document WO 2017/217783 A1 divulgue un procédé selon le préambule de la revendication 1.

### Exposé de l'invention

Pour ce faire, l'invention propose selon un premier aspect un procédé selon la revendication 1.

La présence de boucles dans la structure de la préforme permet une grande souplesse pour déformer la structure, même pour une préforme s'étendant sur plusieurs dizaines de centimètre suivant deux dimensions. Ainsi, lors de l'étape a) la structure est réalisée à plat, ou tout du moins est apte à être disposée à plat avec une hauteur de quelques millimètres (de préférence moins d'un centimètre) et est conformable pour présenter une forme tridimensionnelle avec une profondeur de plusieurs centimètres à plusieurs dizaines de centimètres. La forme tridimensionnelle souhaitée est en particulier telle que la préforme présente une forme en creux définissant un volume intérieur. Les zones transversales et les zones longitudinales s'étendent globalement perpendiculairement à la zone principale et continument depuis la zone principale. Les zones transversales s'étendent perpendiculairement aux zones longitudinales avec continuité de la structure entre la zone principale, les zones transversales et les zones longitudinales. Autrement dit, la forme tridimensionnelle souhaitée est en particulier obtenue schématiquement en partant de la structure à plat en pliant chacune des deux zones transversales et des deux zones longitudinales, le pliage de chaque portion transversale intersectant le pliage de chacune des zones longitudinales et le pliage de chaque portion longitudinale intersectant le pliage de chacune des zones transversales. Les formes réalisables et plus généralement l'étendue des possibilités esthétiques sont accrues.

A l'inverse, une structure tissée ne permet de réaliser que des pliages disjoints (ne s'intersectant pas), ce qui permet uniquement une mise en forme développable, parfois dénommée 2,5 D (sauf à créer une discontinuité de matière en particulier entre les zones transversales et les zones longitudinales), contrairement à l'invention qui permet une mise en forme 3D avec une continuité complète d'une part entre la zone principale et les zones transversales et les zones longitudinales, et d'autre part entre les zones transversales et les zones longitudinales qui forme un rebord continu.

Selon une autre caractéristique conforme à l'invention, à l'étape a), on réalise de préférence la structure de la préforme par tricotage.

La technique du tricotage peut être définie usuellement comme consistant à constituer des boucles, appelées mailles, passées les unes dans les autres. Elle permet de réaliser aisément et rapidement une structure satisfaisante de diverses dimensions.

Selon une caractéristique conforme à l'invention, on réalise la structure de la préforme en formant :
- une première ligne de boucles avec un fil principal,
- une deuxième ligne de boucles en faisant passer le fil principal à travers les boucles de la première ligne de boucles, et
- ainsi de suite, une suite de lignes de boucles, en faisant passant le même fil principal d'une ligne de boucles à travers les boucles de la ligne de boucles précédente.

Selon une caractéristique encore complémentaire conforme à l'invention, de préférence dans la zone principale :
- les lignes de boucles s'étendent suivant une direction longitudinale, et
- les lignes de boucles se suivent suivant une direction transversale perpendiculaire à la direction longitudinale.

Selon une caractéristique encore complémentaire conforme à l'invention, de préférence dans les zones longitudinales, les lignes de boucles s'étendent suivant la direction longitudinale.

Ainsi, la réalisation de l'ensemble de la structure est relativement aisée et la robustesse de la coque réalisée est améliorée.

Selon une caractéristique alternative ou complémentaire conforme à l'invention, de préférence dans au moins la majeure partie des zones transversales, les lignes de boucles se suivent suivant la direction transversale.

Ainsi, la réalisation de l'ensemble de la structure est relativement aisée et la robustesse de la coque réalisée est encore améliorée.

Selon une autre caractéristique alternative ou complémentaire conforme à l'invention, de préférence la structure comprend au moins deux zones de raccordement disposées chacune entre l'une des zones longitudinales et l'une des zones transversales.

Selon une autre caractéristique conforme à l'invention, lors de l'étape a), on fait varier la forme des boucles, afin de former au moins une zone de densité prédéterminée et une zone de densité élevée.

Ainsi, la résistance de la coque obtenue est adaptée en fonction des zones subissant le plus de contraintes mécaniques ou le plus de frottement.

Selon une autre caractéristique conforme à l'invention, de préférence, lors de l'étape a) on réalise la structure de la préforme telle que :
- dans la zone de densité prédéterminée, les boucles se succèdent avec un premier pas de boucle et les lignes de boucles se suivent avec un premier pas de ligne,
- dans la zone de densité élevée, les boucles se succèdent avec un deuxième pas de boucle et les lignes de boucles se suivent avec un deuxième pas de ligne, et
- le premier pas de ligne est supérieur au deuxième pas de ligne d'au moins 50%, de préférence le double du deuxième pas de ligne.

Une telle variation de pas de ligne peut être aisément obtenue avec des techniques de tricotage connues tout en conservant une bonne résistance de la structure entre la zone de densité prédéterminée et la zone de densité élevée, de sorte qu'une faiblesse de la coque au niveau de la jonction entre la zone de densité prédéterminée et la zone de densité élevée est évitée.

Selon une caractéristique complémentaire conforme à l'invention, de préférence l'écart entre le premier pas de boucle et le deuxième pas de boucle est inférieur à 20% du premier pas de boucle, de préférence inférieur à 10% du premier pas de boucle.

La variation du pas de boucle tout en conservant une liaison satisfaisante au sein de la structure est difficile à réaliser, de sorte que le pas de boucle est de préférence sensiblement constant dans toute la structure.

Selon une autre caractéristique conforme à l'invention, de préférence le fil principal s'étend continument sur l'ensemble de la structure de la préforme.

Ainsi, la robustesse de la coque réalisée par le procédé est encore accrue.

Selon une caractéristique complémentaire conforme à l'invention, lors de l'étape a), de préférence on emprisonne un fil secondaire dans les boucles de la structure.

Ainsi, la préforme comprenant en outre un fil secondaire la résistance de la coque obtenue est améliorée en répartissant le renfort dans la structure et/ou l'obtention de la coque est simplifiée en répartissant le matériau de matrice dans la préforme, selon que le fil secondaire comprend une fibre structurelle et/ou comprend le matériau de matrice.

Selon une caractéristique complémentaire conforme à l'invention, lors de l'étape a), de préférence on fait passer alternativement les boucles de chacune des lignes de boucles d'un côté et de l'autre du fil secondaire.

Ainsi, le fil secondaire est étroitement lié à la structure et s'étend continument dans la structure. De préférence, le fil secondaire, pouvant être formé d'une pluralité de filaments, s'étend continument (le fil secondaire n'est pas formé d'une pluralité de portions disjointes) sur l'ensemble de la préforme.

Selon une caractéristique complémentaire ou alternative conforme à l'invention, le fil secondaire comprend de préférence au moins une partie du renfort et/ou du matériau de matrice.

Ainsi, la réalisation de la coque est simplifiée, la coque est renforcée ou de meilleure qualité du fait que le matériau de matrice et le renfort peuvent être uniformément répartis et à proximité l'un de l'autre dans la préforme.

Selon une caractéristique complémentaire conforme à l'invention, le fil secondaire comporte une âme formant au moins en partie le renfort et l'âme est recouverte d'un enrobage en polymère thermoplastique, l'âme et l'enrobage en polymère thermoplastique étant de préférence coextrudées.

Ainsi, le fil secondaire contribue à la fois en tant que renfort et en tant que matrice à la préforme pour la réalisation de la coque en composite.

Selon une caractéristique complémentaire conforme à l'invention, le polymère thermoplastique est de préférence du polypropylène (PP) ou polyéthylène téréphtalate (PET).

Selon une caractéristique complémentaire ou alternative conforme à l'invention, l'âme et l'enrobage en polymère thermoplastique sont de préférence dans le même matériau.

Ainsi, la cohésion est améliorée.

Selon une autre caractéristique conforme à l'invention, on réalise de préférence le fil principal à partir de portions provenant alternativement d'un premier élément filaire et d'un deuxième élément filaire, le premier élément filaire et le deuxième élément filaire ayant des couleurs différentes.

Ainsi, on réalise une coque agrémentée d'une décoration comprenant au moins deux couleurs sans nuire à la robustesse de la coque ni compliquer notablement la réalisation de la coque.

Selon une caractéristique complémentaire conforme à l'invention, le premier élément filaire et le deuxième élément se succèdent de préférence de manière répétitive afin de réaliser un motif répétitif dans la structure.

Selon une autre caractéristique conforme à l'invention, le renfort est de préférence au moins en partie formé par le fil principal.

Selon une autre caractéristique conforme à l'invention, le matériau de matrice pour l'imprégnation du renfort lors de l'étape c) est au moins en partie apporté par la préforme.

Ainsi, la réalisation de la coque est simplifiée et la coque est de meilleure qualité du fait que le matériau de matrice et le renfort peuvent être uniformément répartis et à proximité l'un de l'autre dans la préforme.

Selon encore une autre caractéristique conforme à l'invention et pouvant être indépendante, de préférence, lors de l'étape c) on utilise un matériau de matrice en polyoléfine, et lors d'une étape d) on applique sur le corps un revêtement en polyoléfine.

Du fait que le matériau de matrice et le matériau du revêtement sont tous les deux en polyoléfine, l'adhésion entre le corps et le revêtement est améliorée, de sorte que l'interposition d'un adhésif est évitée.

Lorsque la caractéristique précitée est indépendante, l'invention concerne un autre aspect dans lequel le procédé pour réaliser une coque de bagage comprend :
- réaliser un corps, le corps présentant une paroi principale, deux parois longitudinales et deux parois transversales, le corps comprenant un matériau en polyoléfine, puis
- appliquer sur le corps un revêtement en polyoléfine.

Selon une caractéristique complémentaire, de préférence lors de l'étape d) le revêtement et/ou le corps est chauffé et le revêtement est pressé contre le corps.

Selon une caractéristique encore complémentaire conforme à l'invention, de préférence lors de l'étape d) :
- l'un au moins parmi le revêtement et/ou le corps est chauffé entre 140 et 200 degrés, et
- le revêtement est pressé contre le corps à une pression comprise entre 10 bar et 20 bar pendant une durée comprise entre 1 minute et 30 minutes.

Selon une caractéristique complémentaire ou alternative conforme à l'invention, de préférence le revêtement comprend une couche de mousse et un film (non lacunaire à cellules ouvertes, en particulier non moussé), et lors de l'étape d) la couche de mousse est appliquée contre le corps.

Selon une caractéristique complémentaire conforme à l'invention, la couche de mousse présente de préférence une densité comprise entre 250g/m² et 750g/m², de préférence entre 450g/m² et 500g/m².

Selon une caractéristique complémentaire ou alternative conforme à l'invention, de préférence lors d'une étape d') préalable à l'étape d) :
- le revêtement est découpé sous forme de croix présentant une zone centrale et quatre zones périphériques (la zone centrale est de préférence rectangulaire), les zones périphériques présentent chacune deux bords latéraux s'étendant depuis la zone centrale, et
- les zones périphériques sont pliées (notamment courbées) perpendiculairement à la zone centrale et chaque bord latéral est amené au contact d'un bord latéral adjacent.

Selon une caractéristique complémentaire conforme à l'invention les zones périphériques sont de préférence trapézoïdales.

Ainsi, les bords latéraux ne s'étendent pas dans les coins de la coque, ce qui permet d'améliorer la robustesse de la coque.

Selon une caractéristique complémentaire ou alternative conforme à l'invention, lors de l'étape d') lesdits bords latéraux adjacents sont de préférence chauffés et pressés pour les souder l'un à l'autre.

Selon une caractéristique complémentaire conforme à l'invention, lors de l'étape d') de préférence on déplace un galet sur lesdits bords adjacents.

Selon une autre caractéristique alternative ou complémentaire conforme à l'invention, lors de l'étape d), de préférence le revêtement appliqué le corps est dans un matériau en majeure partie (plus de 50%), plus préférentiellement essentiellement (au moins 90%) identique à celui du matériau de matrice, de préférence en polypropylène.

L'invention concerne en outre une coque de bagage selon la revendication 16.

Selon une caractéristique complémentaire conforme à l'invention, de préférence le renfort et la matrice s'étendent chacun dans la paroi principale, dans les deux parois longitudinales et dans les deux parois transversales.

Selon une autre caractéristique complémentaire conforme à l'invention, de préférence, dans la paroi principale, les lignes de boucles s'étendent chacune suivant une direction longitudinale, et les lignes de boucles se suivent de manière adjacente suivant une direction transversale perpendiculaire à la direction longitudinale.

Selon une autre caractéristique conforme à l'invention, le renfort comprend un fil principal et ledit fil principal est tricoté. De préférence, ledit fil principal forme lesdites boucles, les boucles d'une ligne de boucles passent à travers les boucles des lignes adjacentes.

Selon une caractéristique complémentaire, le fil principal s'étend de préférence dans la paroi principale, les deux parois longitudinales et les deux parois transversales, et plus préférentiellement dans l'ensemble du corps (toute la surface du corps).

Selon une autre caractéristique conforme à l'invention, de préférence la matrice est en matériau polymère thermoplastique, plus préférentiellement en polypropylène (PP) ou polyéthylène téréphtalate (PET).

Selon une autre caractéristique, pouvant être indépendante, conforme à l'invention, de préférence la matrice est en polyoléfine et le corps composite est recouvert d'un revêtement en polyoléfine, de préférence en polypropylène.

Lorsque la caractéristique précitée est indépendante, l'invention concerne un autre aspect dans lequel la coque de bagage comprend un corps, ledit corps est rigide (et de préférence étanche), le corps présente une paroi principale, deux parois longitudinales et deux parois transversales, le corps comprend un matériau en polyoléfine (de préférence en polypropylène) et est recouvert d'un revêtement en polyoléfine (de préférence en polypropylène).

Selon une caractéristique complémentaire conforme à l'invention, de préférence le revêtement comprend une couche de mousse et un film (non lacunaire à cellules ouvertes, en particulier non moussé), la couche de mousse étant interposée entre le corps et le film.

Dans divers modes de réalisation de la coque selon l'invention, on peut éventuellement avoir recours en outre à l'une et/ou à l'autre des dispositions suivantes :
- le renfort est en polypropylène (PP) ou polyéthylène téréphtalate (PET),
- le renfort est en aramide, en carbone, en fibres de verre ou en lin,
- la proportion de matériau de renfort est au moins 50% plus élevée dans la zone de densité élevée que dans la zone de densité prédéterminée, et la coque comprend au moins une roulette fixée au corps dans la zone de densité élevée.
- le revêtement présente une surface extérieure visible et ladite surface extérieure présente un motif répétitif s'étendant sur les deux parois longitudinales et les deux parois transversales.

L'invention concerne enfin un bagage comprenant une première coque et une deuxième coque, la deuxième coque présentant l'une et/ou les autres des caractéristiques précitées et la deuxième coque étant mobile par rapport à la première coque entre une position ouverte et une position fermée, le bagage présentant un volume intérieur clos en position fermée et présentant une ouverture d'accès en position ouverte.

La première coque peut présenter une profondeur relativement faible, jusqu'à correspondre à l'épaisseur notamment si la première coque est en forme de plaque (pouvant notamment être incurvée) et/ou si la première coque fait office de porte d'accès au volume intérieur.

### Brève description des figures

D'autres caractéristiques et avantages de la présente invention apparaîtront dans la description détaillée suivante, se référant aux dessins annexés dans lesquels :
- FIG.1 est une vue en perspective d'un bagage conforme à l'invention en position fermée,
- FIG. 2 est une vue en perspective du bagage en position ouverte,
- FIG. 3 est une vue éclatée en perspective du bagage,
- FIG. 4 illustre une première étape de réalisation d'une coque du bagage,
- FIG. 5 est une représentation schématique à échelle agrandie de la zone repérée V à FIG. 4,
- FIG. 6 est une représentation schématique à échelle agrandie de la zone repérée VI à FIG. 4
- FIG. 7 illustre de manière schématique un fil principal et un fil secondaire selon un mode de réalisation conforme à l'invention,
- FIG. 8 illustre une deuxième étape de réalisation de la coque,
- FIG. 9 illustre une troisième étape de réalisation de la coque,
- FIG. 10 illustre la coque après la troisième étape,
- FIG. 11 illustre une quatrième étape de réalisation de la coque,
- FIG. 12 illustre une cinquième étape de réalisation de la coque,
- FIG. 13 illustre la coque après la cinquième étape.

### Description détaillée de l'invention

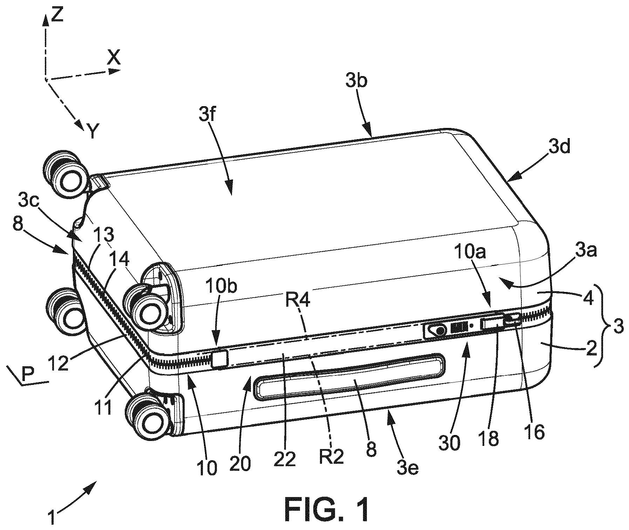

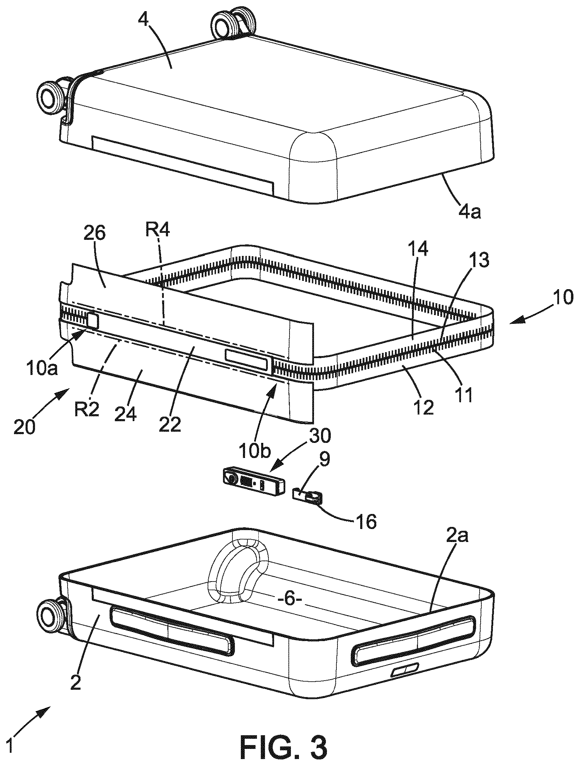

Les figures 1 à 3 illustrent un bagage comprenant essentiellement un contenant 3 et un dispositif d'articulation 20, ainsi qu'une fermeture à glissière 10 et un dispositif de verrouillage 9 (sur la Figure 3).

Dans le mode de réalisation illustré, le bagage définit une valise 1. Le contenant 3 comprend une première coque 2 et une deuxième coque 4 reliées par un dispositif d'articulation 20. La première coque 2 et la deuxième coque 4 sont relativement rigides. De plus, tel qu'illustré à la figure 1, le contenant 3 est sensiblement parallélépipédique. Le contenant 3 comprend deux grandes faces latérales 3a, 3b s'étendant suivant une direction longitudinale X, deux petites faces latérales 3c, 3d (de plus petites dimensions) s'étendant suivant une direction transversale Y, une face principale inférieure 3e et une face principale supérieure 3f. La face principale inférieure 3e et la face principale supérieure 3f sont sensiblement plane et perpendiculaire à une direction d'élévation Z, la direction d'élévation Z étant perpendiculaire à la direction longitudinale X et à la direction transversale Y. Les deux grandes faces latérales 3a, 3b et les deux petites faces latérales 3c, 3d s'étendent suivant la direction d'élévation Z. Les deux grandes faces latérales 3a, 3b sont plus précisément perpendiculaire à la direction transversale Y et les deux petites faces latérales 3c, 3d sont plus précisément perpendiculaires à la direction longitudinale X.

Dans le mode de réalisation illustré, les grandes faces latérales 3a, 3b et les petites faces latérales 3c, 3d se raccordent les unes aux autres par l'intermédiaire de portions de coin 7a, 7b, 7c, 7d arrondies. Bien que cela ne soit pas préféré, l'arrondi des portions de coin 7a, 7b, 7c, 7d pourrait être réduit jusqu'à ce que les portions de coins 7a, 7b, 7c, 7d disparaissent, les grandes faces latérales 3a, 3b et les petites faces latérales 3c, 3d se raccorderaient alors les unes aux autres par des arêtes vives.

En outre et de manière optionnelle, la valise 1 comprend des roulettes disposées aux quatre coins de la petite face latérale 3c et une poignée télescopique apte à faire saille de la face latérale 3d. La valise 1 comprend en outre une poignée principale de portage 8 disposée sur la grande face latérale 3a. A la figure 1, la valise 1 est illustrée dans la position dans laquelle elle est destinée à reposer sur un sol en vue de son ouverture, en appui sur sa face inférieure 3e.

Le contenant 3 délimite un volume intérieur 6 (visible en particulier à la figure 3) destinée à recevoir des affaires en vue de leur transport, en particulier des habits.

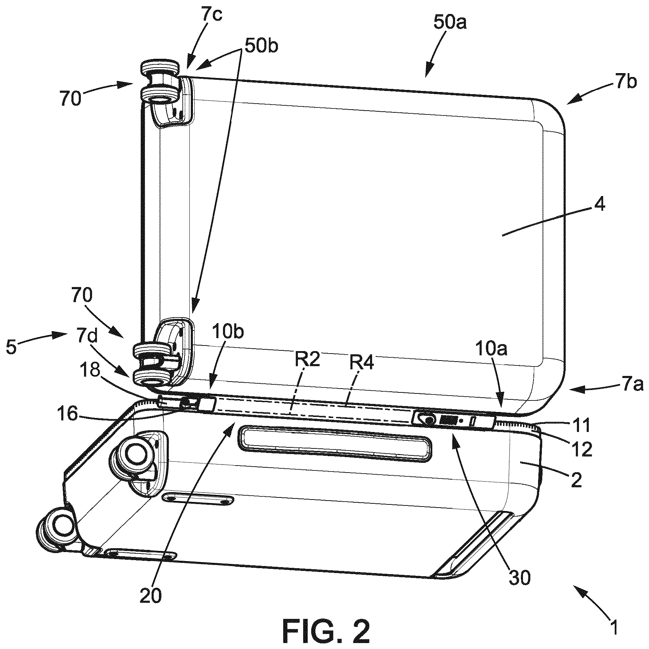

La première coque 2 et la deuxième coque 4 sont reliées par un dispositif d'articulation 20 permettant de déplacer la première coque 2 et la deuxième coque 4 l'une par rapport à l'autre entre une position fermée illustrée à la figure 1 et une position ouverte illustrée à la figure 2. Dans la position fermée illustrée à la figure 1, la deuxième coque 4 est en regard de la première coque 2. La deuxième coque 4 présente un bord 4a venant globalement au contact d'un bord 2a de la première coque 2 suivant un plan de jonction P. Dans la position ouverte, il existe une ouverture d'accès 5 (visible en particulier à la figure 2) entre la première coque 2 et la deuxième 4 afin d'accéder au volume intérieur 6 pour y placer des affaires

Le dispositif d'articulation 20 (visible en particulier aux figures 1 à 3) est disposé au niveau de la grande face latérale 3a et comprend essentiellement un premier support 24 fixé à la première coque 2, un deuxième support 26 fixé à la deuxième coque 4 et un élément intermédiaire 22 s'étendant entre le premier support 24 et le deuxième support 26. L'élément intermédiaire 22 est articulé en rotation par rapport au premier support 24, et par voie de conséquence à la première coque 2, autour d'un premier axe d'articulation R2. L'élément intermédiaire 22 est articulé en rotation par rapport au deuxième support 26, et par voie de conséquence à la deuxième coque 4, autour d'un deuxième axe d'articulation R4. Le premier axe d'articulation R2 et le deuxième axe d'articulation R4 s'étendent tous les deux parallèlement au plan de jonction P et sensiblement au niveau de la grande face latérale 3a dans la position fermée de la valise 1. Le premier axe d'articulation R2 et le deuxième axe d'articulation R4 sont par conséquent parallèles et écartés l'un de l'autre.

En position fermée, la fermeture à glissière 10 s'étend entre une première extrémité longitudinale 10a et une deuxième extrémité longitudinale 10b. La première extrémité longitudinale 10a et la deuxième extrémité longitudinale 10b sont toutes les deux situées au niveau de la grande face latérale 3a. Entre la première extrémité longitudinale 10a et la deuxième extrémité longitudinale 10b, la fermeture à glissière s'étend suivant le plan de jonction à travers les faces latérales 3d, 3b, 3c.

La fermeture à glissière 10 comprend une première bande 12 présentant un premier bord longitudinal 11, une deuxième bande 14 présentant un deuxième bord longitudinal 13, un coulisseau 16 et une tirette 18. Le coulisseau 16 est adapté pour se déplacer entre une position de fermeture dans laquelle il est à proximité de la première extrémité longitudinale 10a et une position d'ouverture dans laquelle il est à proximité de la deuxième extrémité longitudinale 10b.

Lorsque le coulisseau 16 est dans la position de fermeture, le premier bord longitudinal 11 est maintenu adjacent au deuxième bord longitudinal 13. A cet effet, le premier bord longitudinal 11 et le deuxième bord longitudinal 13 sont pourvus de dents complémentaires disposées alternativement sur le premier bord longitudinal 11 et sur le deuxième bord longitudinal 13, comme il est bien connu. Alternativement, d'autres types de fermeture à glissière pourraient être utilisés.

Lorsque le coulisseau 16 est dans la position d'ouverture, le premier bord longitudinal 11 est libéré par rapport au deuxième bord longitudinal 13 entre la première extrémité longitudinale 10a et la deuxième extrémité longitudinale 10b.

Lorsque le coulisseau 16 est dans la position de fermeture, la valise 1 est maintenue en position fermée, la deuxième coque 4 étant au contact de la première coque 2, de sorte que le volume intérieur 6 est clos, empêchant son accès. Lorsque le coulisseau 16 est dans la position d'ouverture, la deuxième coque 4 peut être déplacée entre la position ouverte à la position fermée grâce au dispositif d'articulation 20, tel que décrit précédemment.

Le dispositif de verrouillage 9 est apte à coopérer avec le coulisseau 16 pour le maintenir dans la position de fermeture.

La réalisation de la valise 1 et plus particulièrement de la deuxième coque 4 va maintenant être décrite.

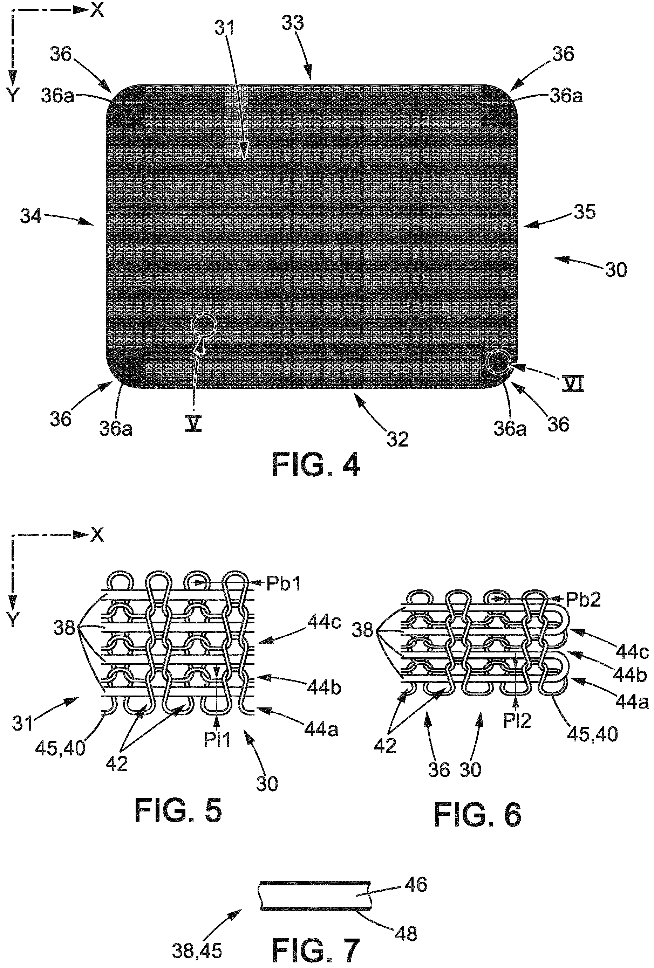

Tel qu'illustré à la figure 4, une préforme 30 comprenant une structure 40 et un fil secondaire 38 est tout d'abord réalisée. La structure 40 comprend une zone principale 31, une première zone longitudinale 32, une deuxième zone longitudinale 33, une première zone transversale 34, une deuxième zone transversale 35 et quatre zones de raccordement 36.

La zone principale 31 est située au centre de la structure 40 et est rectangulaire. La zone principale 31 constitue la majeure zone de la structure 40. La zone principale 31 est destinée à réaliser la face principale supérieure 3f de la deuxième coque 4.

La première zone longitudinale 32, la deuxième zone longitudinale 33, la première zone transversale 34, la deuxième zone transversale 35 et les zones de raccordement 36, sont disposées autour de la zone principale 31.

Il est à noter que la séparation de la structure en zone principale 31, première zone longitudinale 32, deuxième zone longitudinale 33, première zone transversale 34, deuxième zone transversale 35 et zones de raccordement 36 est destinée à permettre une correspondance avec les différentes parois de la coque à réaliser, mais n'est pas nécessairement visible. En particulier, dans le mode de réalisation illustré, la frontière entre la zone principale 31, la première zone longitudinale 32, la deuxième zone longitudinale 33, la première zone transversale 34 et la deuxième zone transversale 35 représentée par un trait mixte court et long est fictive.

La structure 40 est souple et peut-être mise dans une position sensiblement plane illustrée à la figure 4.

Dans le mode de réalisation illustré, la première zone longitudinale 32, la deuxième zone longitudinale 33, la première zone transversale 34 et la deuxième zone transversale 35 sont rectangulaires. Elles sont destinées à réaliser respectivement les grandes faces latérales 3a, 3b et les petites faces latérales 3c, 3d de la deuxième coque 4.

Les zones de raccordement 36 sont sensiblement carrées, avec un bord extérieur 36a pouvant être arrondi. Les zones de raccordement 36 sont destinées à réaliser des portions de coin 7a, 7b, 7c, 7d arrondies disposées aux quatre coins de la coque 4 (tel qu'illustré à la figure 2).

En variante, si la deuxième coque 4 présentait des arrêtes à la place des portions de coin 7a, 7b, 7c, 7d arrondies, la préforme 30, et en particulier la structure 40, conserveraient la même forme, mais les zones de raccordement 36 n'existeraient plus en tant que telles, les parties correspondant aux zones de raccordement se répartissant alors entre la première zone longitudinale 32, la deuxième zone longitudinale 33, la première zone transversale 34 et la deuxième zone transversale 35 qui seraient alors chacune de forme trapézoïdale.

Dans le mode de réalisation illustré, la structure 40 est réalisée par tricotage d'un fil principal 45. Tel qu'illustré en particulier aux figures 5 et 6, la structure 40 est formée par des boucles 42 se succédant en formant des lignes de boucles 44a, 44b, 44c s'étendant suivant la direction longitudinale X. En variante, les lignes de boucles 44a, 44b, 44c pourraient s'étendre suivant la direction transversale Y.

Une première ligne de boucles 44a est formée, puis une deuxième ligne de boucles 44b est formée en faisant passer le fil principal 45 à travers les boucles 42 de la première ligne de boucles 44a. Tel qu'illustré à la figure 6, la première ligne 44a est formée dans un sens (de gauche à droite sur la figure), puis à la fin de la première ligne 44a, le fil principal 45 est recourbé à 180 degrés et la deuxième ligne de boucles 44b est formée en sens opposé (de droite à gauche sur la figure 6).

Dans le mode de réalisation illustré, en même temps qu'une ligne de boucles 44a, 44b, 44c est formée, le fil secondaire38 est intégré à la préforme 30. Le fil secondaire 38 est inséré dans la structure 40 au fur à mesure de la réalisation de la structure 40 en disposant le fil secondaire 38 suivant la même direction et le même sens que les lignes de boucles 44a, 44b, 44c, autrement dit suivant la direction longitudinale X dans le mode de réalisation illustré (de gauche à droite pour la première ligne de boucles 44a et de droite à gauche pour la deuxième ligne de boucles 44b), et en formant alternativement les boucles 42 au-dessus et en-dessous du fil secondaire 38. De même que le fil principal 45, le fil secondaire 38 est recourbé à 180 degrés en arrivant à la fin de la première ligne de boucles 44a et repart en sens opposé dans la deuxième ligne de boucles 44b.

Arrivés à l'extrémité de la deuxième ligne de boucles 44b qui correspond sensiblement au début de la première ligne de boucles 44a, le fil principal 45 et le fil secondaire 38 sont à nouveau recourbés à 180 degrés et une troisième ligne de boucles 44c est formée, de gauche à droite comme la première ligne de boucle 44a, le fil principal 45 passant à travers les boucles 42 de la deuxième ligne de boucles 44b et le fil secondaire 38 est placé alternativement au-dessus et en -dessous des boucles 42. Ainsi de suite, toutes les lignes de boucles 44a, 44b, 44c de la structure 40 sont formées, les lignes de boucles 44a, 44b, 44c se suivant selon la direction transversale Y.

Le fil secondaire 38 est ainsi réparti sensiblement uniformément dans toute la structure 40 tout en restant circonscrit à l'étendue de la structure 40.

Le fil principal 45 et le fil secondaire 38 sont de préférence continus sur l'ensemble de la préforme 30. Toutefois, le fil principal 45 et le fil secondaire 38 peuvent être constitués chacun par une pluralité de filaments accolés s'étendant sur l'ensemble de la préforme 40. D'autre part, le fil principal 45 et le fil secondaire 38 peuvent être constitués chacun par une succession de tronçons d'éléments filaires de couleurs différentes pour créer un motif sur la coque supérieure 4, les tronçons d'élément filaire étant aboutés, fixés bout à bout ou analogue.

Dans le mode de réalisation illustré, les lignes de boucles 44a, 44b, 44c s'étendent dans la même direction tant dans la zone principale 31 que dans la première zone longitudinale 32, la deuxième zone longitudinale 33, la première zone transversale 34, la deuxième zone transversale 35 et les zones de raccordement 36. En variante, les lignes de boucles 44a, 44b, 44c de l'une des zones 31, 32, 33, 34, 35 de la structure 40 pourrait s'étendre perpendiculairement (suivant la direction transversale) aux lignes de boucles 44a, 44b, 44c d'une autre zone de la structure.

Tel qu'illustré à la figure 5, dans la zone principale 31, les boucles 42 se succèdent suivant la direction longitudinale X avec un premier pas de boucle Pb1 et les lignes de boucles 44a, 44b, 44c se suivent suivant la direction transversale Y avec un premier pas de ligne Pl1,

Tel qu'illustré à la figure 6, dans les zones de raccordement 36, les boucles 42 se succèdent suivant la direction longitudinale X avec un deuxième pas de boucle Pb2 et les lignes de boucles 44a, 44b, 44c se suivent suivant la direction transversale Y avec un deuxième pas de ligne Pl2.

Dans le mode de réalisation illustré, le premier pas de ligne Pl1 est le double du deuxième pas de ligne Pl2, tandis que le premier pas de boucle Pb1 est sensiblement égal au deuxième pas de boucle Pb2. La variation du pas de ligne peut être obtenue en faisant varier la tension sur le fil principal 45, en tricotant une maille sur deux, en changeant de point de tricotage ou toute autre méthode habituellement connue dans le domaine.

La variation du pas de ligne Pl1, Pl2, de même la variation du pas de boucle Pb1, Pb2 permet de faire varier la densité de fil principal 45 dans la préforme.

Dans le mode de réalisation illustré, la densité de fil principal 45 a été accrue dans les zones de raccordement 36, afin d'augmenter la résistance mécanique et la résistance à l'usure des portions de coin 7a, 7b, 7c, 7d de la deuxième coque 4, notamment pour les portions de coin 7c, 7d auxquelles les roulettes 70 sont fixées.

Dans le mode de réalisation illustré, la densité du fil principal 45 est la même dans la première zone longitudinale 32, la deuxième zone longitudinale 33, la première zone transversale 34, la deuxième zone transversale 35 que dans la zone principale 31. Toutefois, il pourrait être prévu de densifier le fil principal 45 dans l'une ou l'autre de ces zones de la structure 40.

Tel qu'illustré à la figure 7, dans le mode de réalisation illustré, le fil principal 45 et le fil secondaire 38 sont du type polymère auto renforcé, usuellement dénommé SRP (Self Reinforced Polymer) et comprennent chacun une âme formant renfort 46 et un enrobage formant matériau de matrice 48. L'âme est réalisée dans la même matière que l'enrobage, mais la matière de l'âme est compactée et/ou son orientation est modifiée par rapport à l'enrobage, afin d'améliorer ses propriétés mécaniques et augmenter la température à laquelle elle fond. Le fil principal 45 et le fil secondaire 38 sont de préférence réalisé en polypropylène, usuellement dénommé SRPP (Self Reinforced Polypropylene).

Ainsi, la structure 40 et le fil secondaire 38 fournissent chacun le renfort 46 grâce à l'âme et la matrice 48 grâce à l'enrobage pour réaliser un matériau composite, de préférence en polymère thermoplastique.

En variante, l'un et ou l'autre parmi le fil principal 45 et le fil secondaire 38 pourrait ne fournir que le renfort ou que la matrice pour réaliser un matériau composite. Ainsi, en particulier, l'un parmi le fil principal 45 et le fil secondaire 38 pourrait constituer le renfort et être de préférence en aramide, carbone, fibres de verre, ou lin, et l'autre parmi le fil principal 45 et le fil secondaire pourrait constituer la matrice et être de préférence en polypropylène (PP) ou en polyéthylène téréphtalate (PET).

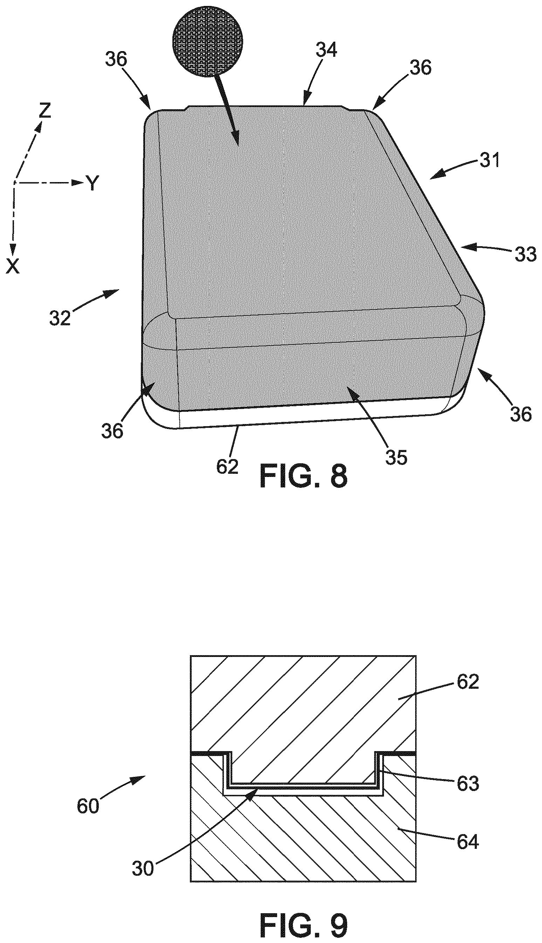

Tel qu'illustré à la figure 8, la préforme 30 est ensuite mise en place sur un poinçon 62, usuellement dénommé bâche.

Pour ce faire, la zone principale 31 s'étendant perpendiculairement à la direction d'élévation Z, la première zone longitudinale 32 et la deuxième zone longitudinale 33 sont courbées à angle droit autour de la direction longitudinale X, afin de s'étendre perpendiculairement la direction transversale Y, tandis que la première zone transversale 34 et la deuxième zone transversale 35 sont courbées à angle droit autour de la direction transversale Y afin de s'étendre perpendiculairement la direction longitudinale X. Les zones de raccordement 36 se déforment pour continuer à relier la première zone longitudinale 32, la première zone transversale 34, la deuxième zone longitudinale 33 et la deuxième zone transversale 35.

Dans le mode de réalisation illustré, une seule préforme est mise en forme sur le poinçon 62. En variante, plusieurs préformes 30 peuvent être superposées, les lignes de boucle des préformes superposées s'étendant alors de préférence suivant des directions différentes, afin de neutraliser les contraintes internes et les effets de vrillage, risquant de déformer les coques au fil du temps.

Ensuite, tel qu'illustré à la figure 9, la préforme est placé dans un moule 60 comprenant, outre le poinçon formant un premier élément de moule 62, un deuxième élément de moule 64 (usuellement dénommé matrice). Après avoir placé la préforme dans une cavité 63 entre le premier élément de moule 62 (poinçon) et le deuxième élément de moule 64 (matrice), la température et la pression sont augmentés dans la cavité 63, de préférence jusqu'à atteindre entre 50 et 200 degrés et une pression entre 10 et 20 bar, puis la température et la pression sont de préférence maintenues constantes de quelques minutes à 30 minutes. Les conditions de température, pression et durée sont déterminées pour faire fondre le matériau de matrice, mais pas le matériau de renfort. En particulier, dans le cas où le fil principal 45 ou le fil secondaire 38 sont en polymère auto-renforcé, usuellement dénommé SRP, la température est déterminée pour ne faire fondre que superficiellement le fil principal 45 ou le fil secondaire. En effet, les conditions de température, de pression et de temps doivent être définies de manière à faire fondre le matériau de matrice 48 sans dégrader le renfort 46.

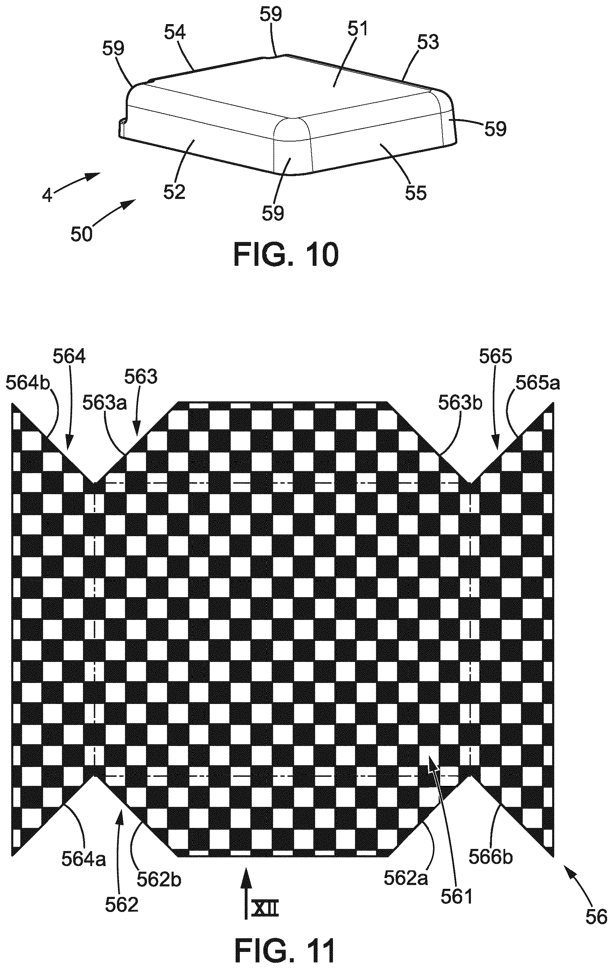

La cavité 63 est ensuite refroidie, le moule 62 est ouvert et une coque 4 comprenant corps 50 rigide est obtenue. Tel qu'illustré à la figure 10, le corps 50 comporte une paroi principale 51, une première paroi longitudinale 52, une deuxième paroi longitudinale 53, une première paroi transversale 54, une deuxième paroi transversale 55 et des portions de coins 59. La paroi principale 50 correspond à la zone principale 31, la première paroi longitudinale 52 correspond à la première zone longitudinale 32, la deuxième paroi longitudinale 53 correspond à la deuxième zone longitudinale 33, la première paroi transversale 54 correspond à la première zone transversale 34, la deuxième paroi transversale 55 correspond à la deuxième zone transversale 35 et les portions de coins 59 correspondent aux zones de raccordement 36.

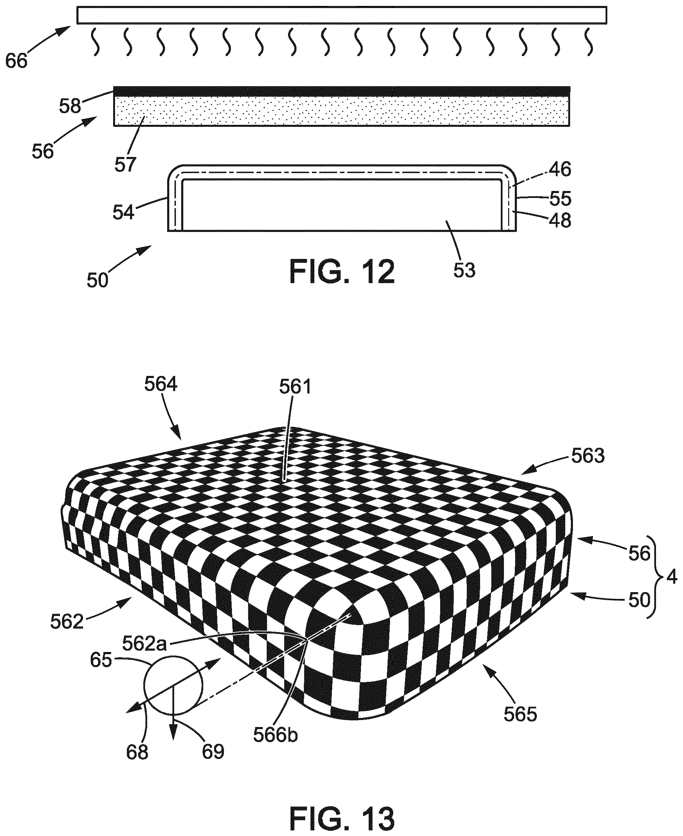

Tel qu'illustré à la figure 12, le renfort 46, constitué par l'âme du fil principal 45 et du fil secondaire 38 dans le mode de réalisation illustré, s'étend dans la paroi principale 51, la première paroi longitudinale 52, la deuxième paroi longitudinale 53, la première paroi transversale 54, la deuxième paroi transversale 55 et les portions de coins 59. En outre, la matrice 48 est formée par la matière de l'enrobage du fil principal 45 et du fil secondaire 38 qui a fondu dans la cavité 63. Ainsi, le renfort 46 est noyé dans la matrice 48 formant un complexe composite, de préférence thermoplastique.

Tel qu'illustré à la figure 11, on découpe ensuite un revêtement 56 sous forme sensiblement de croix pour former une zone présentant une zone centrale 561 et quatre zones périphériques 562, 563, 564, 565. Les zones périphériques présentent chacune deux bords latéraux 562a, 562b ; 563a, 563b ; 564a, 564b ; 565a, 565b s'étendant depuis la zone centrale 561. La zone centrale 561 est rectangulaire et les zones périphériques 562, 563, 564, 565 sont trapézoïdales. Le revêtement 56 présente un motif décoratif répétitif s'étendant dans la zone centrale 561 et les zones périphériques 562, 563, 564, 565. Dans le mode de réalisation illustré, le mode de réalisation illustré est un damier, mais les carrés noirs pourraient être remplacés par un autre motif, de préférence présentant une symétrie adaptée à la jonction des bords latéraux 562a, 562b ; 563a, 563b ; 564a, 564b ; 565a, 565b de manière esthétique.

Tel qu'illustré à la figure 12, dans le mode de réalisation représenté, le revêtement 56 comprend une couche de mousse 57 et un film 58 (non lacunaire). La couche de mousse 57 et le film 58 sont en polyoléfine, de préférence en polypropylène. Le motif décoratif est présent sur la surface extérieure du film 58.

Tel qu'illustré à la figure 12, le revêtement 56 est chauffé par un dispositif de chauffage 66 à une température de préférence comprise entre 140 et 200 degrés.

Tel qu'illustré à la figure 13, les zones périphériques 562, 563, 564, 565 sont pliées perpendiculairement à la zone centrale 561. La zone centrale 561 et les zones périphériques 562, 563, 564, 565 sont pressées, de préférence entre 10 bar et 20 bar pendant une durée comprise de préférence entre 1 minute et 30 minutes, respectivement contre la paroi principale 51, la première paroi longitudinale 52, la deuxième paroi longitudinale 53, la première paroi transversale 54 et la deuxième paroi transversale 55. Les zones périphériques 562, 563, 564, 565 recouvrent également les portions de coin 59 du corps 50.

Chaque bord latéral 562a, 562b ; 563a, 563b ; 564a, 564b ; 565a, 565b est amené au contact d'un bord latéral adjacent et les bords latéraux adjacents sont pressés l'un contre l'autre au moyen d'un galet 65.

En particulier, la flèche 68 illustre le déplacement du galet 65 sur la ligne de jonction entre le bord latéral 562a et le bord latéral 566b et la flèche 69 illustre la pression exercée. Le revêtement 56 adhère sur le corps 50 pour former la deuxième coque 4 comprenant le corps 50 recouvert du revêtement 56.

La découpe du revêtement 56 adaptée au motif décoratif répétitif permet de reconstituer un motif décoratif sur la deuxième coque 4 dans lequel la ligne de jonction entre le bord latéral 562a et le bord latéral 566b est invisible.

Bien entendu l'invention n'est nullement limitée au(x) mode(s) de réalisation décrit(s) à titre illustratif, non limitatif. Dans un mode de réalisation qui ne fait pas partie de la présente invention, au lieu d'être tricotée, la préforme pourrait être formée à partir d'un élément structurel ajouré et déformable formant renfort. Le renfort pourrait être surmoulé par une matière formant matrice et étant de préférence en matériau polymère thermoplastique. Les ajours dans l'élément structurel formant renfort pourraient être réalisés par découpage laser ou poinçonnage, afin de former des boucles s'étendant dans deux directions du type illustré dans le document EP0806190A1.

Au lieu d'être positionné sur la grande face latérales 3a, le dispositif d'articulation pourrait être placé sur l'une des deux petites faces latérales 3c, 3d.

Le dispositif d'articulation pourrait être différent et notamment comporter un seul axe d'articulation.

La première coque 2 pourrait ne s'étendre que suivant la face principale inférieure 3e et former une porte. La première coque 2 ne comportant alors pas de roulette.

## Revendications

1. Procédé pour réaliser une coque (4) de bagage comprenant :
a) réalisation d'une préforme (30) comportant une structure (40), la préforme (30) incluant un renfort (46), la structure (40) comprend une zone principale (31), deux zones longitudinales (32, 33) et deux zones transversales (34, 35), la structure (40) présente des boucles (42) se succédant en formant des lignes de boucles (44a, 44b, 44c), les lignes de boucles (44a, 44b, 44c) sont reliées les unes aux autres, la structure (40) étant réalisée par tricotage en formant :
- une première ligne de boucles (44a) avec un fil principal (45),
- une deuxième ligne de boucles (44b) en faisant passer le fil principal (45) à travers les boucles (42) de la première ligne de boucles (44a), et
- ainsi de suite, une suite de lignes de boucles (44a, 44b, 44c), en faisant passant le fil principal (45) d'une ligne de boucles (44c) à travers les boucles de la ligne de boucles précédente (44b),
b) mise en place de la préforme (30) sur un poinçon (62), et
c) imprégnation du renfort (46) de la préforme (30) par un matériau de matrice (48) pour réaliser une coque (4) comportant un corps (50), le corps (50) étant en composite et comportant la matrice (48) et le renfort (46), et le corps présentant une paroi principale (51), deux parois longitudinales (52, 53) et deux parois transversales (54, 55),
**caractérisé en ce que** lors de l'étape a), on fait varier la forme des boucles (42), afin de former au moins une zone de densité prédéterminée (31, 32, 33, 34, 35) et une zone de densité élevée (36).

2. Procédé selon la revendication précédente dans lequel lors de l'étape a) on réalise la structure (40) telle que :
- dans la zone de densité prédéterminée (31, 32, 33, 34, 35), les boucles (42) se succèdent avec un premier pas de boucle (Pb1) et les lignes de boucles se suivent avec un premier pas de ligne (PI1),
- dans la zone de densité élevée (36), les boucles (42) se succèdent avec un deuxième pas de boucle (Pb2) et les lignes de boucles se suivent avec un deuxième pas de ligne (Pl2), et
- le premier pas de ligne (Pl1) est supérieur d'au moins 50%, de préférence le double, au deuxième pas de ligne (Pl2).

3. Procédé selon la revendication précédente dans lequel l'écart entre le deuxième pas de boucle (Pb2) et le premier pas de boucle (Pb1) est inférieur à 20% du premier pas de boucle (Pb1), de préférence inférieur à 10% du premier pas de boucle (Pb1).

4. Procédé l'une quelconque des revendications précédentes dans lequel on réalise le fil principal (45) à partir de portions provenant alternativement d'un premier élément filaire et d'un deuxième élément filaire, le premier élément filaire et le deuxième élément filaire ayant des couleurs différentes.

5. Procédé selon la revendication précédente dans lequel le premier élément filaire et le deuxième élément filaire se succèdent de manière à réaliser un motif répétitif dans la structure.

6. Procédé selon l'une quelconque des revendications précédentes, dans lequel :
- lors de l'étape c) on utilise un matériau de matrice (48) en polyoléfine, et
- lors d'une étape d) on applique sur le corps un revêtement (56) en polyoléfine.

7. Procédé selon la revendication précédente dans lequel lors de l'étape d) le revêtement (56) et/ou le corps (50) est chauffé (66) et le revêtement (56) est pressé contre le corps (50).

8. Procédé selon la revendication précédente dans lequel lors de l'étape d) :
- l'un au moins parmi le revêtement (56) et/ou le corps (50) est chauffé (66) entre 140 et 200 degrés, et
- le revêtement (56) est pressé contre le corps (50) à une pression comprise entre 10 bar et 20 bar pendant une durée comprise entre 1 minute et 30 minutes.

9. Procédé selon l'une quelconque des revendications 6 à 8 dans lequel :
- le revêtement (56) comprend une couche de mousse (57) et un film (58), et
- lors de l'étape d) la couche de mousse (57) est appliquée contre le corps (50).

10. Procédé selon la revendication précédente dans lequel la couche de mousse (57) présente une densité comprise entre 250g/m² et 750g/m², de préférence entre 450g/m² et 500g/m².

11. Procédé selon l'une quelconque des revendications 6 à 10 dans lequel, dans une étape d') préalable à l'étape d) :
- le revêtement (56) est découpé sous forme de croix présentant une zone centrale (561) et quatre zones périphériques (562, 563, 564, 565), les zones périphériques présentent chacune deux bords latéraux (562a, 562b ; 563a, 563b ; 564a, 564b ; 565a, 565b) s'étendant depuis la zone centrale (561), et
- les zones périphériques (562, 563, 564, 565) sont pliées perpendiculairement à la zone centrale (561) et chaque bord latéral (562a, 562b ; 563a, 563b ; 564a, 564b ; 565a, 565b) est amené au contact d'un bord latéral adjacent.

12. Procédé selon la revendication précédente dans lequel les zones périphériques (562, 563, 564, 565) sont trapézoïdales.

13. Procédé selon l'une quelconque des revendications 11 et 12 dans lequel lors de l'étape d') lesdits bords latéraux adjacents sont chauffés (66) et pressés pour les souder l'un à l'autre.

14. Procédé selon la revendication précédente dans lequel lors de l'étape d') on déplace (68) un galet (59) sur lesdits bords adjacents.

15. Procédé selon l'une quelconque des revendications 6 à 14 dans lequel lors de l'étape d), le revêtement (56) appliqué sur le corps (50) est dans un matériau en majeure partie (plus de 50%), de préférence essentiellement (au moins 90%) identique à celui du matériau de matrice (48), de préférence en polypropylène.

16. Coque (4) de bagage comprenant un corps (50), ledit corps (50) étant rigide, en composite et comportant une matrice (48) et un renfort (46), le corps (50) présentant une paroi principale (51), deux parois longitudinales (52, 53) et deux parois transversales (54, 55), ladite coque est caractérisée en que :
- le renfort (46) comporte au moins une zone principale comprenant des boucles (42) se succédant en formant des lignes de boucles (44a, 44b, 44c), les lignes de boucles (44a, 44b, 44c) étant reliées les unes aux autres,
- le renfort (46) comprend un fil principal (45) et ledit fil principal (45) est tricoté, et
- le renfort (46) est noyé dans la matrice (48),
dans laquelle le corps (50) présente une zone (50a) de densité prédéterminée en renfort et une zone (50b) de densité élevée en renfort, la proportion de matériau de renfort (46) étant plus élevée dans la zone (50b) de densité élevée que dans la zone (50a) de densité prédéterminée.

17. Coque selon la revendication précédente dans lequel la matrice (48) est en polyoléfine et le corps (50) composite est recouvert d'un revêtement (56) en polyoléfine, de préférence en polypropylène.

18. Coque selon la revendication précédente dans laquelle le revêtement (56) comprend une couche de mousse (57) et un film (58), la couche de mousse (57) étant interposée entre le corps (50) et le film (58).

19. Coque selon l'une quelconque des revendications 16 à 18 dans laquelle le renfort (46) est en aramide, en carbone, en fibres de verre ou en lin.

20. Coque selon l'une quelconque des revendications 16 à 19 dans laquelle :
- la proportion de matériau de renfort (46) est au moins 50% plus élevée dans la zone (50b) de densité élevée que dans la zone (50a) de densité prédéterminée, et
- la coque (4) comprend au moins une roulette (70) fixée au corps (50) dans la zone de densité élevée (50b).

21. Coque selon l'une quelconque des revendications 16 à 20 dans laquelle le revêtement présente une surface extérieure visible et ladite surface extérieure présente un motif répétitif s'étendant sur les deux parois longitudinales et les deux parois transversales.

22. Bagage comprenant une première coque (3) et une deuxième coque (4) selon l'une quelconque des revendications 16 à 21, la deuxième coque (4) étant mobile par rapport à la première coque (2) entre une position ouverte et une position fermée, le bagage présentant un volume intérieur (6) clos en position fermée et présentant une ouverture d'accès en position ouverte.

## Patentansprüche

1. Verfahren zum Herstellen einer Gepäckschale (4), umfassend:
a) Herstellung einer Vorform (30), welche eine Struktur (40) umfasst, wobei die Vorform (30) eine Verstärkung (46) umfasst, wobei die Struktur (40) einen Hauptbereich (31), zwei Längsbereiche (32, 33) und zwei Querbereiche (34, 35) aufweist, die Struktur (40) Maschen (42) aufweist, welche aufeinander folgen, um Maschenreihen (44a, 44b, 44c) zu bilden, wobei die Maschenreihen (44a, 44b, 44c) miteinander verbunden sind, wobei die Struktur (40) durch Stricken hergestellt wird, indem:
- eine erste Maschenreihe (44a) mit einem Hauptfaden (45) gebildet wird,
- eine zweite Maschenreihe (44b) gebildet wird, indem der Hauptfaden (45) durch die Maschen (42) der ersten Maschenreihe (44a) geführt wird, und
- so fortfahrend eine Abfolge von Maschenreihen (44a, 44b, 44c) gebildet wird, indem der Hauptfaden (45) einer Maschenreihe (44c) durch die Maschen der vorhergehenden Maschenreihe (44b) geführt wird,
b) Aufbringen der Vorform (30) auf einen Stempel (62), und
c) Imprägnieren der Verstärkung (46) der Vorform (30) mit einem Matrixmaterial (48) zur Herstellung einer Schale (4), welche einen Körper (50) umfasst, wobei der Körper (50) aus einem Verbundwerkstoff besteht und die Matrix (48) sowie die Verstärkung (46) umfasst, und der Körper eine Hauptwand (51), zwei Längswände (52, 53) und zwei Querwände (54, 55) aufweist,
**dadurch gekennzeichnet, dass** in Schritt a) die Form der Maschen (42) variiert wird, um wenigstens einen Bereich mit vorbestimmter Dichte (31, 32, 33, 34, 35) und einen Bereich mit erhöhter Dichte (36) zu bilden.

2. Verfahren nach dem vorhergehenden Anspruch, wobei in Schritt a) die Struktur (40) derart hergestellt wird, dass:
- in dem Bereich mit vorbestimmter Dichte (31, 32, 33, 34, 35) die Maschen (42) mit einem ersten Maschenabstand (Pb1) aufeinander folgen und die Maschenreihen mit einem ersten Reihenabstand (Pl1) aufeinander folgen,
- in dem Bereich mit erhöhter Dichte (36) die Maschen (42) mit einem zweiten Maschenabstand (Pb2) aufeinander folgen und die Maschenreihen mit einem zweiten Reihenabstand (Pl2) aufeinander folgen, und
- der erste Reihenabstand (Pl1) um wenigstens 50 %, vorzugsweise um das Doppelte, größer ist als der zweite Reihenabstand (Pl2).

3. Verfahren nach dem vorhergehenden Anspruch, wobei der Unterschied zwischen dem zweiten Maschenabstand (Pb2) und dem ersten Maschenabstand (Pb1) weniger als 20 % des ersten Maschenabstands (Pb1) beträgt, vorzugsweise weniger als 10 % des ersten Maschenabstands (Pb1).

4. Verfahren nach einem der vorhergehenden Ansprüche, wobei der Hauptfaden (45) aus Abschnitten hergestellt wird, welche abwechselnd von einem ersten Fadenelement und einem zweiten Fadenelement stammen, wobei das erste Fadenelement und das zweite Fadenelement unterschiedliche Farben aufweisen.

5. Verfahren nach dem vorhergehenden Anspruch, wobei das erste Fadenelement und das zweite Fadenelement derart aufeinander folgen, dass ein sich wiederholendes Muster in der Struktur gebildet wird.

6. Verfahren nach einem der vorhergehenden Ansprüche, wobei:
- in Schritt c) ein Matrixmaterial (48) aus Polyolefin verwendet wird, und
- in einem Schritt d) eine Beschichtung (56) aus Polyolefin auf den Körper aufgebracht wird.

7. Verfahren nach dem vorhergehenden Anspruch, wobei in Schritt d) die Beschichtung (56) und/oder der Körper (50) erwärmt wird (66) und die Beschichtung (56) gegen den Körper (50) gepresst wird.

8. Verfahren nach dem vorhergehenden Anspruch, wobei in Schritt d):
- wenigstens eines aus der Beschichtung (56) und/oder dem Körper (50) auf zwischen 140 und 200 Grad erwärmt wird (66), und
- die Beschichtung (56) mit einem Druck zwischen 10 bar und 20 bar für eine Dauer zwischen 1 Minute und 30 Minuten gegen den Körper (50) gepresst wird.

9. Verfahren nach einem der Ansprüche 6 bis 8, wobei:
- die Beschichtung (56) eine Schaumschicht (57) und eine Folie (58) umfasst, und
- in Schritt d) die Schaumschicht (57) gegen den Körper (50) aufgebracht wird.

10. Verfahren nach dem vorhergehenden Anspruch, wobei die Schaumschicht (57) eine Dichte zwischen 250 g/m² und 750 g/m², vorzugsweise zwischen 450 g/m² und 500 g/m², aufweist.

11. Verfahren nach einem der Ansprüche 6 bis 10, wobei in einem dem Schritt d) vorausgehenden Schritt d'):
- die Beschichtung (56) in Form eines Kreuzes zugeschnitten wird, welches einen zentralen Bereich (561) und vier Randbereiche (562, 563, 564, 565) aufweist, wobei die Randbereiche jeweils zwei Seitenkanten (562a, 562b; 563a, 563b; 564a, 564b; 565a, 565b) aufweisen, welche sich von dem zentralen Bereich (561) aus erstrecken, und
- die Randbereiche (562, 563, 564, 565) senkrecht zu dem zentralen Bereich (561) gefaltet werden und jede Seitenkante (562a, 562b; 563a, 563b; 564a, 564b; 565a, 565b) mit einer benachbarten Seitenkante in Kontakt gebracht wird.

12. Verfahren nach dem vorhergehenden Anspruch, wobei die Randbereiche (562, 563, 564, 565) trapezförmig sind.

13. Verfahren nach einem der Ansprüche 11 und 12, wobei in Schritt d') die benachbarten Seitenkanten erwärmt (66) und zusammengepresst werden, um sie miteinander zu verschweißen.

14. Verfahren nach dem vorhergehenden Anspruch, wobei in Schritt d') eine Rolle (59) über die benachbarten Kanten bewegt wird (68).

15. Verfahren nach einem der Ansprüche 6 bis 14, wobei in Schritt d) die auf den Körper (50) aufgebrachte Beschichtung (56) aus einem Material besteht, welches größtenteils (mehr als 50 %), vorzugsweise im Wesentlichen (wenigstens 90 %), mit dem Matrixmaterial (48) identisch ist, vorzugsweise aus Polypropylen.

16. Gepäckschale (4), umfassend einen Körper (50), wobei der Körper (50) starr ist, aus einem Verbundwerkstoff besteht und eine Matrix (48) sowie eine Verstärkung (46) umfasst, wobei der Körper (50) eine Hauptwand (51), zwei Längswände (52, 53) und zwei Querwände (54, 55) aufweist, wobei die Schale **dadurch gekennzeichnet ist, dass**:
- die Verstärkung (46) wenigstens einen Hauptbereich umfasst, welcher Maschen (42) umfasst, welche aufeinanderfolgend Maschenreihen (44a, 44b, 44c) bilden, wobei die Maschenreihen (44a, 44b, 44c) miteinander verbunden sind,
- die Verstärkung (46) einen Hauptfaden (45) umfasst und der Hauptfaden (45) gestrickt ist, und
- die Verstärkung (46) in die Matrix (48) eingebettet ist,
wobei der Körper (50) einen Bereich (50a) mit vorbestimmter Verstärkungsdichte und einen Bereich (50b) mit erhöhter Verstärkungsdichte aufweist, wobei der Anteil an Verstärkungsmaterial (46) im Bereich (50b) mit erhöhter Dichte höher ist als im Bereich (50a) mit vorbestimmter Dichte.

17. Schale nach dem vorhergehenden Anspruch, wobei die Matrix (48) aus Polyolefin besteht und der Verbundkörper (50) mit einer Beschichtung (56) aus Polyolefin, vorzugsweise aus Polypropylen, bedeckt ist.

18. Schale nach dem vorhergehenden Anspruch, wobei die Beschichtung (56) eine Schaumschicht (57) und eine Folie (58) umfasst, wobei die Schaumschicht (57) zwischen dem Körper (50) und der Folie (58) eingefügt ist.

19. Schale nach einem der Ansprüche 16 bis 18, wobei die Verstärkung (46) aus Aramid, Kohlenstoff, Glasfasern oder Flachs besteht.

20. Schale nach einem der Ansprüche 16 bis 19, wobei:
- der Anteil an Verstärkungsmaterial (46) im Bereich (50b) mit erhöhter Dichte um mindestens 50 % höher ist als im Bereich (50a) mit vorbestimmter Dichte, und
- die Schale (4) wenigstens eine Rolle (70) umfasst, welche im Bereich mit erhöhter Dichte (50b) an dem Körper (50) befestigt ist.

21. Schale nach einem der Ansprüche 16 bis 20, wobei die Beschichtung eine sichtbare Außenfläche aufweist und die Außenfläche ein sich wiederholendes Motiv aufweist, welches sich über die beiden Längswände und die beiden Querwände erstreckt.

22. Gepäckstück, umfassend eine erste Schale (3) und eine zweite Schale (4) nach einem der Ansprüche 16 bis 21, wobei die zweite Schale (4) relativ zu der ersten Schale (2) zwischen einer offenen Stellung und einer geschlossenen Stellung beweglich ist, wobei das Gepäckstück in geschlossener Stellung ein geschlossenes Innenvolumen (6) aufweist und in offener Stellung eine Zugangsöffnung aufweist.

## Claims

1. Method for producing a shell (4) for luggage, comprising:
a) producing a preform (30) comprising a structure (40), the preform (30) including a reinforcement (46), the structure (40) comprising a main zone (31), two longitudinal zones (32, 33), and two transverse zones (34, 35), the structure (40) having loops (42) successively forming rows of loops (44a, 44b, 44c), the rows of loops (44a, 44b, 44c) being connected to each other, the structure (40) being produced by knitting by forming:
- a first row of loops (44a) with a main thread (45),
- a second row of loops (44b) while passing the main thread (45) through the loops (42) of the first row of loops (44a),
- and so on in a series of rows of loops (44a, 44b, 44c), passing the main thread (45) of a row of loops (44c) through the loops of the previous row of loops (44b),
b) placing the preform (30) on a punch (62), and
c) impregnating the reinforcement (46) of the preform (30) with a matrix material (48) in order to produce a shell (4) comprising a body (50), the body (50) being made of a composite material and comprising the matrix (48) and the reinforcement (46), and the body having a main wall (51), two longitudinal walls (52, 53) and two transverse walls (54, 55),
**characterized in that** during step a), the shape of the loops (42) is varied in order to form at least one predetermined density zone (31, 32, 33, 34, 35) and one high density zone (36).

2. Method according to the preceding claim, wherein, during step a), the structure (40) is produced such that:
- in the predetermined density zone (31, 32, 33, 34, 35), the loops (42) successively follow one after another with a first loop pitch (Pb1) and the rows of loops follow one after another with a first row pitch (PI1),
- in the high density zone (36), the loops (42) successively follow one after another with a second loop pitch (Pb2) and the rows of loops follow one after another with a second row pitch (PI2), and
- the first row pitch (PI1) is at least 50% higher than, preferably double, the second row pitch (PI2).

3. Method according to the preceding claim, wherein the difference between the second loop pitch (Pb2) and the first loop pitch (Pb1) is less than 20% of the first loop pitch (Pb1), preferably less than 10% of the first loop pitch (Pb1).

4. Method according to any one of the preceding claims, wherein the main thread (45) is produced from portions which alternate in coming from a first thread element and from a second thread element, the first thread element and the second thread element having different colors.

5. Method according to the preceding claim, wherein the first thread element and the second thread element follow one after another in succession to produce a repeating pattern in the structure.

6. Method according to any one of the preceding claims, wherein:
- during step c) a matrix material (48) of polyolefin is used, and
- during a step d) a covering (56) of polyolefin is applied to the body.

7. Method according to the preceding claim, wherein, in step d), the covering (56) and/or the body (50) is heated (66) and the covering (56) is pressed against the body (50).

8. Method according to the preceding claim, wherein, during step d):
- at least one among the covering (56) and/or the body (50) is heated (66) to between 140 and 200 degrees, and
- the covering (56) is pressed against the body (50) at a pressure of between 10 bar and 20 bar for a period of between 1 minute and 30 minutes.

9. Method according to any one of claims 6 to 8, wherein:
- the covering (56) comprises a foam layer (57) and a film (58), and
- during step d) the foam layer (57) is applied against the body (50).

10. Method according to the preceding claim, wherein the foam layer (57) has a density of between 250g/m² and 750 g/m², preferably between 450g/m² and 500g/m².

11. Method according to any one of claims 6 to 10, wherein, in a step d') prior to step d):
- the covering (56) is cut in the shape of a cross having a central zone (561) and four peripheral zones (562, 563, 564, 565), the peripheral zones each having two side edges (562a, 562b; 563a, 563b; 564a, 564b; 565a, 565b) extending from the central zone (561), and
- the peripheral zones (562, 563, 564, 565) are folded perpendicularly to the central zone (561), and each side edge (562a, 562b; 563a, 563b; 564a, 564b; 565a, 565b) is brought into contact with a side edge which is adjacent.

12. Method according to the preceding claim, wherein the peripheral zones (562, 563, 564, 565) are trapezoidal.

13. Method according to any one of claims 11 and 12, wherein, in step d') said side edges which are adjacent are heated (66) and pressed together to weld them.

14. Method according to the preceding claim, wherein, during step d') a roller (59) is rolled (68) over said edges which are adjacent.

15. Method according to any one of claims 6 to 14, wherein, during step d), the covering (56) applied to the body (50) is of a material that for the most part (more than 50%), preferably essentially (at least 90%), is the same as that of the matrix material (48), preferably polypropylene.

16. Shell (4) for luggage comprising a body (50), said body (50) being rigid, of composite material and comprising a matrix (48) and a reinforcement (46), the body (50) having a main wall (51), two longitudinal walls (52, 53), and two transverse walls (54, 55), said shell being **characterized in that**:
- the reinforcement (46) comprises at least one main zone comprising loops (42) successively forming rows of loops (44a, 44b, 44c), the rows of loops (44a, 44b, 44c) being connected to each other,
- the reinforcement (46) comprises a main thread (45) and said main thread (45) is knitted, and
- the reinforcement (46) is embedded in the matrix (48),
wherein the body (50) has a predetermined density zone (50a) as reinforcement and a high density zone (50b) as reinforcement, the proportion of reinforcing material (46) is higher in the high density zone (50b) than in the predetermined density zone (50a).

17. Shell according to the preceding claim, wherein the matrix (48) is made of polyolefin and the body (50), composite, is covered with a covering (56) made of polyolefin, preferably of polypropylene.

18. Shell according to the preceding claim, wherein the covering (56) comprises a foam layer (57) and a film (58), the foam layer (57) being interposed between the body (50) and the film (58).

19. Shell according to any one of claims 16 to 18, wherein the reinforcement (46) is made of aramid, carbon, glass fibers, or linen.

20. Shell according to any one of claims 16 to 19, wherein:
- the proportion of reinforcing material (46) is at least 50% higher in the high density zone (50b) than in the predetermined density zone (50a), and
- the shell (4) comprises at least one wheel (70) attached to the body (50) in the high density zone (50b).

21. Shell according to any one of claims 16 to 20, wherein the covering has a visible outer surface and said outer surface has a repeating pattern extending over the two longitudinal walls and the two transverse walls.

22. Luggage comprising a first shell (3) and a second shell (4) according to any one of claims 16 to 21, the second shell (4) being movable relative to the first shell (2) between an open position and a closed position, the luggage having an interior volume (6) which is closed in the closed position and providing an access opening in the open position.
